# EUROPEAN PATENT SPECIFICATION

(11) **EP 4 521 512 B1**
(45) Date of publication and mention of the grant of the patent: **01.04.2026**
(21) Application number: 24194376.0
(22) Date of filing: 13.08.2024
(51) Int. Cl.: H01M 10/613, H01M 10/625, H01M 10/633, H01M 10/6554, H01M 10/6568, H01M 50/211

(54) **BATTERY SYSTEM INCLUDING COOLING PLATE AND METHOD OF CONTROLLING THE SAME**
BATTERIESYSTEM MIT KÜHLPLATTE UND VERFAHREN ZUR STEUERUNG DAVON
SYSTÈME DE BATTERIE COMPRENANT UNE PLAQUE DE REFROIDISSEMENT ET SON PROCÉDÉ DE COMMANDE

(30) Priority: 06.09.2023 KR 20230118027
(43) Date of publication of application: 12.03.2025
(73) Proprietor: SK On Co., Ltd., Seoul 03161 (KR)
(72) Inventor: CHOI, Yang Kyu, 34124 Daejeon (KR); YOO, Tak Kyung, 34124 Daejeon (KR)
(74) Representative: Prüfer & Partner mbB Patentanwälte · Rechtsanwälte

(56) References cited:
- EP-B1- 3 333 932
- WO-A1-2023/135213
- JP-A- 2017 147 128
- JP-A- 2022 128 335
- KR-A- 20230 124 138
- US-A1- 2022 273 975
- US-A1- 2023 052 320

## Description

### BACKGROUND

### 1. FIELD

Embodiments of the disclosed technology relate to a battery system and a method of controlling the same.

### 2. DESCRIPTION OF RELATED ART

Unlike primary batteries that cannot be recharged, secondary batteries may be charged and discharged, and thus, may be applied to various fields such as digital cameras, mobile phones, laptops, hybrid cars, electric cars, and energy storage systems (ESS). Examples of secondary batteries may include, among others, lithium ion batteries, nickel-cadmium batteries, nickel-metal hydride batteries, and nickel-hydrogen batteries.

Document EP 3 333 932 B1 discloses a battery system comprising a plurality of battery modules disposed in a battery pack frame and a cooling plate engaged to the battery pack frame and covering the battery modules, wherein the cooling plate includes an accommodation space for a coolant for dissipating heat from the battery modules. The battery system further comprises a cooling passage and a circulation pump for circulating the coolant through the cooling passage and the cooling plate and, furthermore, pressure sensors and temperature sensors. The battery pack frame comprises a compartment accommodating the battery modules, and a portion of the cooling plate melts upon occurrence of a fire in a battery module so that the coolant flows into the compartment.

### SUMMARY

The disclosed technology may be implemented in some embodiments to provide a battery system including a battery pack capable of delaying heat propagation between battery modules. The disclosed technology may be implemented in some embodiments to provide a battery system including a battery pack capable of providing refrigerant to a battery module in which a fire occurs.

A battery system including a cooling plate based on an example embodiment and a method of controlling may be widely applied in green technology fields such as electric vehicles, battery charging stations, and solar power generation and wind power generation using other batteries. In addition, a battery system including a cooling plate based on an example embodiment and a method of controlling the same may be used in eco-friendly electric vehicles, hybrid vehicles, and others to prevent climate change by suppressing air pollution and greenhouse gas emissions.

A battery system according to the invention includes a battery pack including a pack frame, a plurality of battery modules disposed within the pack frame, and a cooling plate covering the plurality of battery modules and including an accommodation space for accommodating a refrigerant, a cooling passage connected to the cooling plate, a circulation pump connected to the cooling passage and configured to circulate the refrigerant within the cooling passage and the cooling plate, a pressure sensor disposed within the cooling passage and configured to detect a pressure in the cooling passage, a plurality of temperature sensors disposed on the plurality of battery modules and configured to detect a temperature of the plurality of battery modules, and a processor electrically connected to the plurality of temperature sensors and the pressure sensor. The processor is configured to adjust an output of the circulation pump based on at least one of a temperature detected by one or more of the plurality of temperature sensors and pressure detected by the pressure sensor.

The pack frame further includes a compartment accommodating at least one of the plurality of battery modules.

At least a portion of the cooling plate is configured to melt based on a fire occurring in at least some of the plurality of battery modules. At least a portion of the refrigerant is configured to flow into a space of a compartment in which a battery module in which the fire occurred among the plurality of battery modules is located through a melted portion of the cooling plate.

The processor is configured to stop an operation of the circulation pump when a temperature detected by the plurality of temperature sensors exceeds a predetermined temperature.

Alternatively, the processor is configured to stop an operation the circulation pump when a difference between temperature values detected by the plurality of temperature sensors is equal to or greater than a predetermined magnitude.

The processor may be configured to reduce the output of the circulation pump when a temperature detected by the plurality of temperature sensors exceeds a predetermined temperature. The processor may be configured to increase the output of the circulation pump when the pressure detected by the pressure sensor is less than a predetermined pressure.

The processor may be configured to reduce the output of the circulation pump when a difference between temperature values detected by the plurality of temperature sensors is equal to or greater than a predetermined magnitude. The processor may be configured to increase the output of the circulation pump when the pressure detected by the pressure sensor is less than a predetermined pressure. The battery system may further include a reserve tank connected to the cooling passage and accommodating at least a portion of the refrigerant.

A size of a volume of the accommodation space of the cooling plate, the cooling passage, and the reserve tank may be greater than or equal to a volume inside a compartment of the pack frame.

The battery system may include a cooling device connected to the cooling passage and configured to cool the refrigerant.

The processor may be configured to activate or drive the circulation pump when the pressure detected by the pressure sensor is less than a predetermined pressure.

The processor may drive the circulation pump for a predetermined time interval after a predetermined time passes after an operation of the circulation pump is stopped based on a temperature detected by the plurality of temperature sensors.

The processor may be configured to activate or drive the circulation pump for a predetermined time interval based on the temperature detected by the temperature sensor after stopping operation of the circulation pump based on a temperature detected by the plurality of temperature sensors.

The processor may be configured to activate or drive the circulation pump for a predetermined time interval based on the pressure detected by the pressure sensor after stopping operation of the circulation pump based on a temperature detected by the plurality of temperature sensors.

The cooling plate may include aluminum.

In some embodiments of the disclosed technology, a method of controlling a battery system includes a temperature detection operation of detecting a temperature of a battery module using a temperature sensor, a temperature comparison operation of comparing the temperature detected by the temperature sensor with a predetermined temperature, a circulation pump driving stop operation of stopping driving a circulation pump when the detected temperature exceeds the predetermined temperature, a pressure comparison operation of comparing a pressure detected using a pressure sensor with a predetermined pressure, and a circulation pump driving operation of driving the circulation pump when the detected pressure is less than the predetermined pressure.

The method of controlling a battery system may further include a circulation pump temporary driving operation of temporarily driving the circulation pump after driving of the circulation pump is stopped based on the temperature detected by the temperature sensor. The circulation pump temporary driving operation may be configured to operate the circulation pump for a predetermined time period after a predetermined time from the circulation pump driving stop operation.

The circulation pump driving operation may be configured to be performed when the pressure detected by the pressure sensor is less than a predetermined value, after the circulation pump temporary driving operation.

In some embodiments of the disclosed technology, a battery system includes a battery pack including a pack frame, a plurality of battery modules disposed within the pack frame, and a cooling plate covering the plurality of battery modules and including an accommodation space for accommodating a refrigerant, a cooling passage connected to the cooling plate, a circulation pump connected to the cooling passage and configured to circulate the refrigerant within the cooling passage and the cooling plate, a pressure sensor disposed within the cooling passage, a plurality of temperature sensors disposed on the plurality of battery modules, and a processor electrically connected to the plurality of temperature sensors and the pressure sensor. The processor is configured to stop driving the circulation pump based on a temperature detected by at least some of the plurality of temperature sensors. The processor is configured to drive the circulation pump based on a pressure detected by the pressure sensor.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery cell based on an example embodiment.
FIG. 2 is a perspective view of a battery module based on an example embodiment.
FIG. 3 is a perspective view of a battery system based on an example embodiment.
FIG. 4 is an exploded perspective view of a battery system based on an example embodiment.
FIG. 5 is a schematic diagram of a battery system based on an example embodiment.
FIG. 6 is a flowchart illustrating a method of controlling a battery system based on an example embodiment.
FIG. 7 is a flowchart illustrating a method of controlling a battery system based on an example embodiment.

### DETAILED DESCRIPTION

Features of the disclosed technology disclosed in this patent document are described by example embodiments with reference to the accompanying drawings.

The disclosed technology may be implemented in some embodiments to provide a battery system including a cooling plate and a method of controlling the same.

Hereinafter, the disclosed technology will be described in detail with reference to the attached drawings. However, this is merely illustrative and the disclosed technology is not limited to the specific embodiments described by way of example.

Secondary batteries may be manufactured to include flexible pouch-type battery cells or rigid prismatic or cylindrical can-type battery cells. A plurality of battery cells may be formed as a stacked cell assembly.

The cell assembly may be disposed inside a case to form a battery module, and a plurality of battery modules may be disposed inside a pack frame to form a battery pack. Battery packs may be used in various systems such as vehicles or energy storage systems.

Electric vehicles, hybrid vehicles, or energy storage systems powered by an electrical energy source may include a plurality of battery cells. Therefore, if a fire starts in one battery module, it can spread to adjacent battery modules or other components. Refrigerants can be used to suppress fires occurring in battery modules. However, the amount of refrigerant that can be accommodated in a vehicle may be limited.

The disclosed technology can be implemented in some embodiments to address these issues by providing a battery system including a battery pack capable of delaying heat propagation between battery modules. In addition, the disclosed technology may be implemented in some embodiments to address these issues by providing a battery system including a battery pack capable of providing refrigerant to a battery module in which a fire occurs.

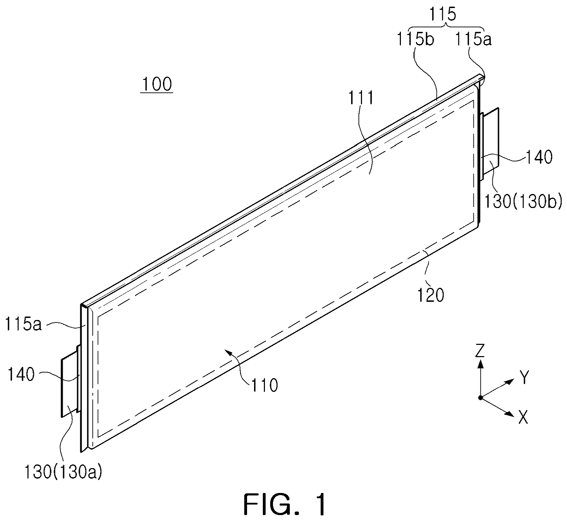

FIG. 1 is a perspective view of a battery cell based on an example embodiment.

Referring to FIG. 1, a battery cell 100 may include a pouch 110, an electrode assembly 120, and an electrode tab 130. The battery cell 100 may be a secondary battery. For example, the battery cell 100 may be a lithium ion battery, but is not limited thereto. For example, the battery cell 100 may be a nickel-cadmium battery, a nickel-metal hydride battery, or a nickel-hydrogen battery that may be charged and discharged.

The pouch 110 may form at least a portion of the exterior of the battery cell 100. The pouch 110 may include an electrode accommodating portion 111 that accommodates the electrode assembly 120 and a sealing portion 115 for sealing at least a portion of the circumference of the electrode accommodating portion 111. The electrode accommodating portion 111 may provide a space to accommodate the electrode assembly 120 and the electrolyte solution.

The sealing portion 115 may be formed by joining at least portions of the circumference of the pouch 110. The sealing portion 115 is formed in the form of a flange extending outwardly from the electrode accommodating portion 111 formed in the shape of a container, and may be disposed along at least a portion of the exterior of the electrode accommodating portion 111. In an example embodiment, the sealing portion 115 may include a first sealing portion 115a where the electrode tab 130 is located and a second sealing portion 115b where the electrode tab 130 is not located. A portion of the electrode tab 130 may be led out or exposed to the outside of the pouch 110. In the position in which the electrode tab 130 is led out, to increase the sealing degree of the first sealing portion 115a and at the same time ensure electrical insulation, the electrode tab 130 may be covered by an insulating film 140. The insulating film 140 is formed of a thinner film material than a material of the electrode tab 130 and may be attached to both sides of the electrode tab 130.

In an example embodiment, the electrode tabs 130 may be disposed on both sides of the battery cell 100 in the longitudinal direction (e.g., Y-axis direction) to face opposite directions. For example, the electrode tab 130 may include a first electrode tab 130a (e.g., positive electrode tab) of a first polarity (e.g., positive electrode) facing one side of the battery cell 100 in the longitudinal direction, and a second electrode tab 130b (e.g., negative electrode tab) of a second polarity (e.g., negative electrode) facing the other side of the battery cell 100 in the longitudinal direction. In the example illustrated in FIG. 1, the sealing portion 115 may include two first sealing portions 115a on which the electrode tabs 130 are disposed and one second sealing portion 115b on which the electrode tabs 130 are not disposed. In an example embodiment, the electrode tab 130 may be referred to as an electrode lead.

The direction in which the electrode tab 130 is located may be selectively designed. In an example embodiment (for example, FIG. 1), the electrode tab 130 may include a first electrode tab 130a facing in the first direction and a second electrode tab 130b located in the opposite direction (e.g., the second direction) of the first electrode tab 130a with respect to the electrode assembly 120. In FIG. 1, the electrode tabs 130 are illustrated as facing in opposite directions on both sides of the battery cell 100 in the longitudinal direction (e.g., the first direction such as Y-axis direction), but the structure of the electrode tab 130 is not limited thereto. For example, two electrode tabs 130 may be arranged substantially in parallel along the longitudinal direction (e.g., Y-axis direction) of the battery cell 100.

In an example embodiment of the disclosed technology, at least some of the sealing portions 115 may be formed to be folded at least once. By folding at least a portion of the sealing portion 115, the bonding reliability of the sealing portion 115 may be improved and the area of the sealing portion 115 may be significantly reduced. Among the sealing portions 115 based on an example embodiment, the second sealing portion 115b on which the electrode tab 130 is not disposed may be folded twice and then fixed by an adhesive member (not illustrated). The angle at which the second sealing portion 115b is bent or the number of times the second sealing portion 115b is bent may be changed. For example, in an example embodiment, the second sealing portion 115b may be folded by 90° with respect to the first sealing portion 115a (not illustrated). On the other hand, the pouch 110 is not limited to a structure in which the sealing portion 115 is formed on three sides by folding one sheet of exterior material as illustrated in FIG. 1.

In some embodiments, the electrode assembly 120 may be manufactured using a variety of methods. In some example embodiments, an electrode assembly may be formed by repeatedly disposing a positive electrode, a negative electrode, and a separator. In some embodiments, the electrode assembly may be a winding type, a stacking type, a zigzag folding type, or a stack-folding type electrode assembly.

In some embodiments discussed in this patent document, the battery cell 100 is illustrated as a pouch-type battery cell including the pouch 110 by way of example. In other embodiments, the battery cell 100 may a shape that is different from the pouch-type battery cell. For example, the battery cell 100 may be a cylindrical battery cell or a prismatic battery cell.

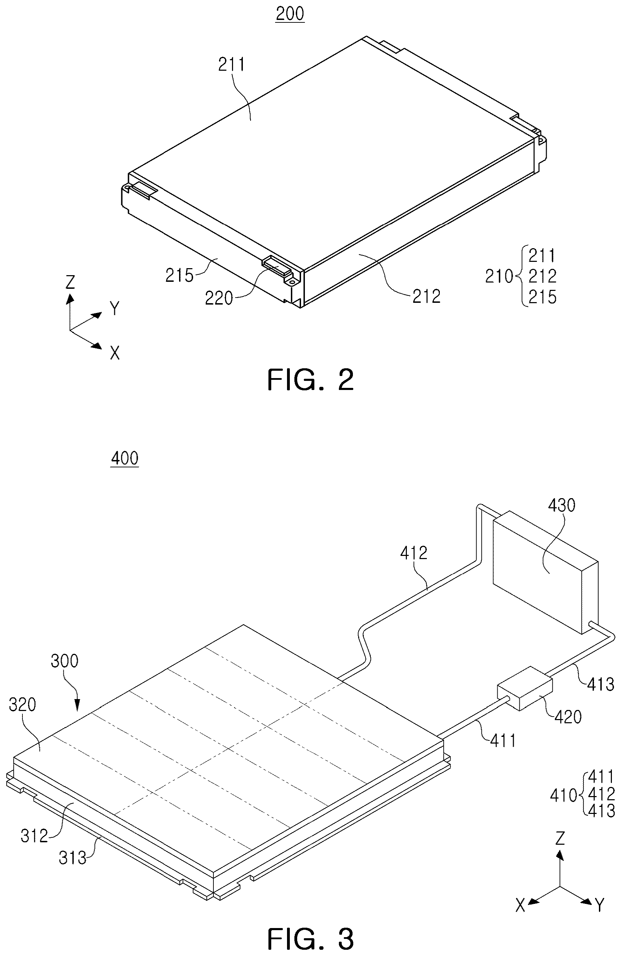

FIG. 2 is a perspective view of a battery module based on an example embodiment.

Referring to FIG. 2, a battery module 200 may include a module case 210 that accommodates a plurality of battery cells (e.g., battery cells 100 of FIG. 1), and a busbar assembly 220.

The battery module 200 may include a cell assembly (not illustrated) including the plurality of battery cells 100. In an example embodiment, the cell assembly may be referred to as a cell stack.

The module case 210 forms at least a portion of the exterior of the battery module 200 and may have an accommodation space for accommodating a plurality of battery cells 100. For example, the module case 210 may include a cover 211 that covers the plurality of battery cells 100 and an accommodating portion 212 that surrounds the lower surface and side surfaces of the plurality of battery cells 100. In an example embodiment, the cover 211 may be referred to as an upper cover.

The module case 210 may include an end plate 215 that covers some of the side surfaces of the plurality of battery cells 100. In an example embodiment, the end plate 215 may be connected to an end of the accommodating portion 212 in the longitudinal direction (e.g., Y-axis direction). The end plate 215 may cover a portion of the side of the cell assembly and at least a portion of the busbar assembly 220.

In an example embodiment, the module case 210 may be formed of a material with high thermal conductivity, such as metal. For example, the module case 210 may be formed of aluminum. However, the material of the module case 210 is not limited thereto. In another embodiment, the module case 210 may be formed of polymer. The module case 210 may be referred to as a housing, a module housing, or a module case.

The busbar assembly 220 may include an electrically conductive internal busbar electrically connected to the electrode tab (e.g., electrode tab 130 in FIG. 1) of the battery cell 100, and a busbar frame supporting the internal busbar. The busbar assembly 220 may include at least one terminal busbar for external electrical connection. The electrode tab 130 of the battery cell 100 may be electrically connected to the outside of the battery module 200 through the internal busbar and the terminal busbar. For example, the terminal busbar of the busbar assembly 220 may be exposed to the outside of the module case 210 through a hole in the end plate 215. For convenience of descriptions, some parts are omitted or exaggerated in this document.

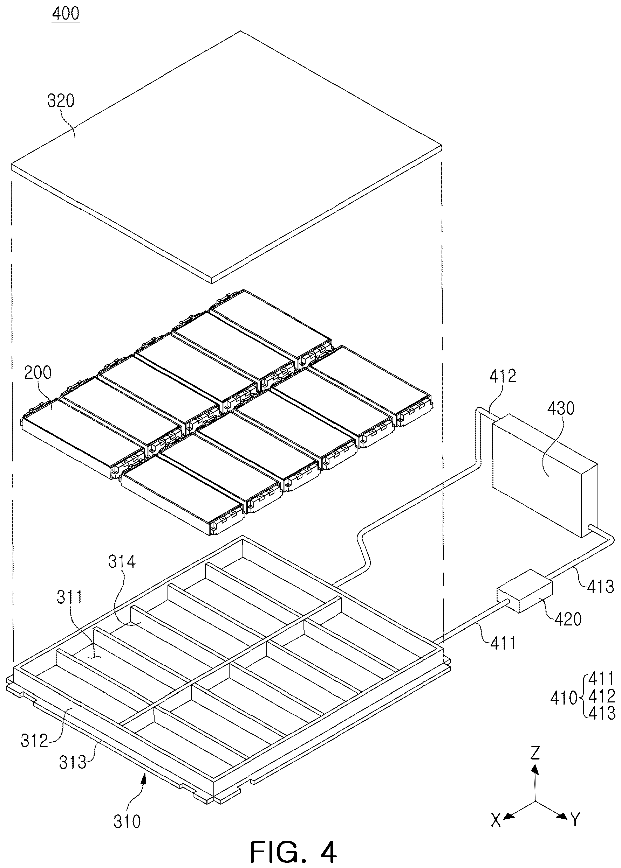

FIG. 3 is a perspective view of a battery system based on an example embodiment. FIG. 4 is an exploded perspective view of a battery system based on an example embodiment.

Referring to FIGS. 3 and 4, a battery system 400 may include a battery pack 300, a cooling passage 410, a circulation pump 420, and a cooling device 430.

The battery pack 300 may include at least one battery module (e.g., the battery module 200 of FIG. 2). For example, the battery pack 300 may include a pack frame 310 that accommodates a plurality of battery modules 200.

The pack frame 310 may include a compartment 311 that accommodates at least one of the plurality of battery modules 200. The pack frame 310 may include a partition wall 314 crossing at least some of the plurality of battery modules 200. The compartment 311 may be a space inside the battery pack 300 divided by the partition wall 314. In an example embodiment, at least some of the plurality of partition walls 314 may include venting holes for guiding the path of gas and/or flame generated in the battery module 200.

The pack frame 310 may form at least a portion of the exterior of the battery pack 300. The pack frame 310 may include a bottom member 313 supporting the battery module 200 and a pack side wall 312 surrounding at least a portion of the battery module 200. The bottom member 313 may support the exterior material (e.g., the module case 210 of FIG. 2) of the battery module 200. The pack side wall 312 may be located between the bottom member 313 and a cooling plate 320.

The battery pack 300 may include the cooling plate 320. The cooling plate 320 may cover a plurality of battery modules 200. For example, the cooling plate 320 may surround the battery module 200 along with the pack side wall 312 and the bottom member 313.

The cooling plate 320 may provide a path for refrigerant to flow. For example, the cooling plate 320 may include an accommodation space 321 that accommodates refrigerant. The accommodation space 321 may be connected to the cooling passage 410. For example, the cooling plate 320 may receive refrigerant through the cooling passage 410. In an example embodiment, the cooling plate 320 may be referred to as a heat sink. The cooling plate 320 may be in contact with or close to a portion (e.g., an upper portion) of the battery module 200. The battery module 200 may be heat dissipated or cooled by refrigerant flowing within the accommodation space 321 of the cooling plate 320.

The refrigerant may be selectively applied as long as it is configured to extinguish a fire in the battery module 200. For example, the refrigerant may include at least one of water, insulating coolant, foam extinguishing agent, powder extinguishing agent, or fire extinguishing gas.

The cooling plate 320 may provide refrigerant to the battery module 200 in a thermal runaway situation of the battery module 200. For example, when the cooling plate 320 is melted, the refrigerant contained in the cooling plate 320 may be transferred to the battery module 200. The cooling plate 320 may be formed of a material that may melt in a thermal runaway situation of the battery module 200. For example, the cooling plate 320 may include aluminum with a melting point temperature lower than the fire ignition temperature of the battery module 200. In an example embodiment, a portion of the cooling plate 320 located on the top of the battery module 200 where thermal runaway occurred is melted, and the refrigerant may be delivered to the compartment 311 where the battery module 200 where thermal runaway or fire has occurred is located by a melted portion of the cooling plate 320. By delivering the refrigerant to the compartment 311 where the battery module 200 where thermal runaway has occurred is located, the cooling efficiency of the battery pack 300 and/or the battery system 400 may be improved.

The battery system 400 may include a battery pack 300 and components for cooling the battery pack 300. For example, the battery system 400 may be a vehicle including the battery pack 300 or an energy storage system including the battery pack 300. In an example embodiment, the battery system 400 may include vehicle body. The vehicle body may accommodate the battery pack 300, the cooling passage 410, the circulation pump 420, the cooling device 430, a pressure sensor 440, a temperature sensor 450, and/or a processor 460.

The battery system 400 may include a cooling passage 410. The cooling passage 410 may provide a path for refrigerant. For example, the cooling passage 410 may provide a path for the refrigerant introduced into the cooling plate 320 of the battery pack 300 and/or the refrigerant discharged from the cooling plate 320. In an example embodiment, the cooling passage 410 may include a first flow path 411 connected to the circulation pump 420 and the battery pack 300, a second flow path 412 connected to the battery pack 300 and the cooling device 430, and a third flow path 413 connected to the cooling device 430 and the circulation pump 420.

The structure in which the cooling passage 410 is connected to the cooling plate 320 is an example. In an example embodiment, the cooling passage 410 may be directly connected to the accommodation space 321 of the cooling plate 320. In another embodiment, the pack frame 310 includes an empty space for the refrigerant to flow, and the cooling passage 410 may be connected to the accommodation space 321 of the cooling plate 320 through the pack frame 310.

The battery system 400 may include the circulation pump 420. The circulation pump 420 may increase the pressure so that the refrigerant circulates in the cooling passage 410 and/or the cooling plate 320. The circulation pump 420 may be connected to the cooling passage 410.

The battery system 400 may include the cooling device 430. The cooling device 430 is connected to the cooling passage 410 and may reduce the temperature of the refrigerant flowing through the cooling passage 410. For example, the cooling device 430 may be a radiator or a heat dissipation device.

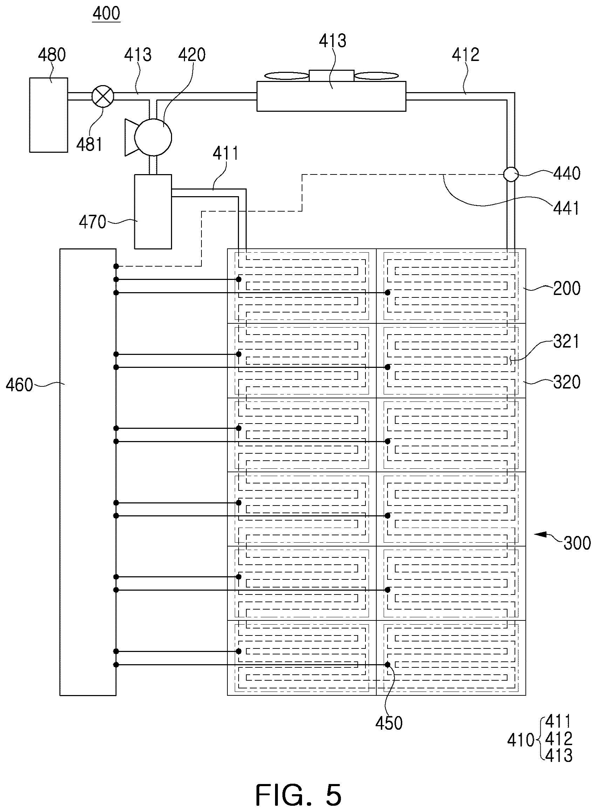

FIG. 5 is a schematic diagram of a battery system based on an example embodiment.

Referring to FIG. 5, the battery system 400 may include a battery pack 300 including a plurality of battery modules 200, a cooling passage 410, a circulation pump 420, a cooling device 430, a pressure sensor 440, a temperature sensor 450, and/or a processor 460.

Descriptions of the battery module 200, the battery pack 300, the cooling passage 410, the circulation pump 420, and the cooling device 430 of FIGS. 3 and/or 4 may be applied to the battery module 200, the battery pack 300, the cooling passage 410, the circulation pump 420, and the cooling device 430 of FIG. 5.

The battery system 400 may detect the temperature of the battery module 200 using the temperature sensor 450. For example, the battery system 400 may include the temperature sensor 450 disposed in a plurality of battery modules 200. In an example embodiment, a plurality of temperature sensors 450 may be disposed in the plurality of battery modules 200, respectively.

The battery system 400 may detect the pressure of the cooling passage 410 using the pressure sensor 440. For example, the battery system 400 may include the pressure sensor 440 disposed within the cooling passage 410. The location where the pressure sensor 440 is disposed may be selectively changed.

The processor 460 may control components of the battery system 400. For example, the processor 460 may be electrically connected to the temperature sensor 450 using a first signal line. The processor 460 may be electrically connected to the pressure sensor 440 using a second signal line 441. The processor 460 may be electrically connected to the circulation pump 420 using a third signal line.

The processor 460 may control the operation of the circulation pump 420 based on the temperature of the battery module 200. For example, when the temperature of the battery module 200 detected by the temperature sensor 450 is a predetermined temperature (e.g., 200 degrees) or more, the processor 460 of the battery system 400 may stop the operation of the circulation pump 420. As another example, when the difference between the temperature values detected by the plurality of temperature sensors 450 disposed in the plurality of battery modules 200, respectively, is greater than or equal to the predetermined temperature, the processor 460 may stop the operation of the circulation pump 420. When the circulation pump 420 is stopped, a portion of the cooling plate 320 may melt. For example, a portion of the cooling plate 320 adjacent to the battery module 200 (for example, trigger module) where a fire occurs may melt.

In an example embodiment, the processor 460 may control the output of the circulation pump 420 based on the temperature of the battery module 200. For example, when the temperature of the battery module 200 detected by the temperature sensor 450 is a predetermined temperature (e.g., 200 degrees) or more, the processor 460 may reduce the output of the circulation pump 420 to less than a predetermined value. As another example, when the difference between the temperature values detected by the plurality of temperature sensors 450 disposed in the plurality of battery modules 200, respectively, is greater than or equal to the predetermined temperature, the processor 460 may reduce the output of the circulation pump 420 to less than a predetermined value. In the case in which the circulation pump 420 is driven with an output of less than a predetermined value, a portion of the cooling plate 320 may melt. For example, a portion of the cooling plate 320 adjacent to the battery module 200 (e.g., trigger module) where a fire occurred may melt.

The refrigerant may be delivered to the battery module 200 where a fire occurred through the melted portion of the cooling plate 320. The melted portion of the cooling plate 320 may be a portion of the cooling plate 320 adjacent to or facing the battery module 200 where a fire occurred, and may refer to a portion melted due to flame and/or gas generated in the battery module 200. The refrigerant may flow into the compartment where the battery module 200 where the fire occurred is located through the melted portion of the cooling plate 320.

As the refrigerant is delivered to the battery module 200 where a fire occurred, heat propagation from the battery module 200 where a fire occurred to adjacent battery modules 200 may be delayed. As the refrigerant is delivered to the battery module 200 through the melted portion of the cooling plate 320, cooling efficiency may be improved.

The processor 460 may control the operation of the circulation pump 420 based on the pressure of the cooling passage 410. When refrigerant is sprayed from the cooling plate 320, the pressure of the cooling passage 410 may be reduced. When the pressure of the cooling passage 410 is reduced, the amount of refrigerant injected into the battery module 200 may be reduced. In an example embodiment, the processor 460 of the battery system 400 may operate the circulation pump 420 when the pressure detected by the pressure sensor 440 is less than a predetermined pressure. In an example embodiment, if no pressure drop is detected or the detected pressure drop value is greater than or equal to a predetermined value (for example, 20%), compared to the pressure drop value in the normal state, the processor 460 may determine that the refrigerant is sprayed due to melting of the cooling plate 320. By operating the circulation pump 420, refrigerant may be supplied to the battery module 200 through the cooling plate 320.

Based on an example embodiment, the processor 460 may change the output of the circulation pump 420 based on the pressure of the cooling passage 410. For example, when the pressure detected by the pressure sensor 440 is less than a predetermined value, the processor 460 may increase the output of the circulation pump to greater than or equal to a predetermined value of the circulation pump 420. Due to an increase in the output of the circulation pump 420, refrigerant may be supplied to the battery module 200 through the cooling plate 320.

The structure in which the processor 460 is disposed is an example. In an example embodiment, the processor 460 may be disposed inside a pack frame (for example, inside the pack frame 310 in FIG. 4). For example, the processor 460 may include a battery management system (BMS). In another embodiment, the processor 460 may be located outside the battery pack 300. For example, the processor 460 may be mounted on a vehicle including the battery pack 300 or an energy storage system including the battery pack 300.

In an example embodiment, the battery system 400 may include at least one or more tanks 470 and 480 containing at least a portion of the refrigerant. For example, the battery system 400 may include a reserve tank 470 connected to the cooling passage 410. The refrigerant supplied from the circulation pump 420 may pass through the reserve tank 470 and be delivered to the battery pack 300.

In an example embodiment, the size of the volume of the cooling passage 410, the reserve tank 470, and the accommodation space 321 of the cooling plate 320 may be the volume or more inside the pack frame 310 of the battery pack 300. The internal volume of the pack frame 310 may refer to the internal volume of the compartment 311 of the pack frame 310 or the volume of the space within the compartment 311, excluding the volume of the battery module 200. By forming the size of the space through which the refrigerant flows (for example, the cooling passage 410, the reserve tank 470, and/or the accommodation space 321 of the cooling plate 320) to be larger than the internal volume of the pack frame 310, the fire extinguishing performance of the battery system 400 may be improved.

The battery system 400 may further include an auxiliary tank 480 spaced apart from the reserve tank 470. The auxiliary tank 480 may be connected to the cooling passage 410. The amount of refrigerant contained in the battery system 400 may be increased by the reserve tank 470 and the auxiliary tank 480, and cooling performance may be improved.

In an example embodiment, the battery system 400 may include a valve 481 located between the auxiliary tank 480 and the cooling passage 410. The refrigerant contained in the auxiliary tank 480 may be delivered to the cooling passage 410 by opening the valve 481. For example, the processor 460 may open the valve 481 when the pressure of the cooling passage 410 is less than a predetermined value.

In an example embodiment, the processor 460 may temporarily drive the circulation pump 420 after the circulation pump 420 is stopped based on the temperature detected by the temperature sensor 450. Due to the temporary operation of the circulation pump 420, the flow rate of the refrigerant in the cooling passage 410 and the cooling plate 320 may be improved. As the flow rate of the refrigerant is improved, at least a portion of the refrigerant may be sprayed to the outside of the cooling plate 320 through the melted portion of the cooling plate 320.

Temporary operation of the circulation pump 420 may be performed based on time, pressure, and/or temperature. In an example embodiment, the processor 460 may operate the circulation pump 420 for a predetermined time period after a predetermined time from when the operation of the circulation pump 420 is stopped based on the temperature detected by the temperature sensor 450.

In an example embodiment, the processor 460 may generate a signal for temporary operation of the circulation pump 420 based on a temperature detected by the temperature sensor 450, after the operation of the circulation pump 420 is stopped based on a temperature detected by the temperature sensor 450. For example, the processor 460 may operate the circulation pump 420 when the temperature detected by the temperature sensor 450 is higher than or equal to a predetermined temperature.

In an example embodiment, the processor 460 may generate a signal for temporary operation of the circulation pump 420 based on the pressure detected by the pressure sensor 440, after the operation of the circulation pump 420 is stopped based on the temperature detected by the temperature sensor 450. For example, the processor 460 may operate the circulation pump 420 when the pressure detected by the pressure sensor 440 is lower than or equal to a predetermined pressure.

After the temporary operation of the circulation pump 420, the processor 460 may detect the pressure of the cooling passage 410 using the pressure sensor 440. When the pressure of the cooling passage 410 is less than a predetermined value, the processor 460 may operate the circulation pump 420. When the pressure of the cooling passage 410 is greater than or equal to a predetermined value, the processor 460 may maintain the circulation pump 420 in a stopped state.

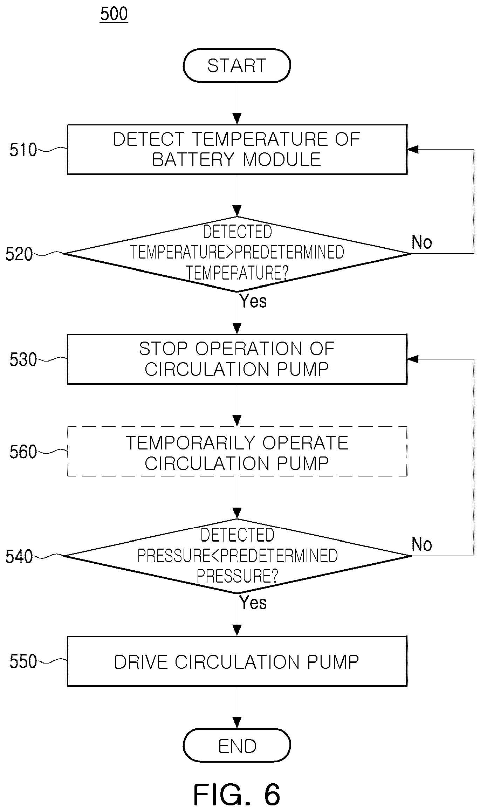

FIG. 6 is a flowchart illustrating the operation of a battery system based on an example embodiment.

Referring to FIG. 6 together with FIG. 5, a method 500 of controlling a battery system may include a temperature detection operation 510, a temperature comparison operation 520, a circulation pump driving stop operation 530, a pressure comparison operation 540, and a circulation pump driving operation 550.

The method 500 of controlling a battery system in FIG. 6 may be a method of controlling the battery system 400 of FIGS. 3 to 5.

The temperature detection operation 510 may be an operation of detecting the temperature of the battery module 200 using the temperature sensor 450. For example, the battery system 400 may include a plurality of temperature sensors 450 to detect temperatures of the plurality of respective battery modules 200.

The temperature comparison operation 520 may be an operation in which the processor 460 compares the temperature detected by the temperature sensor 450 with a predetermined temperature. For example, the battery system 400 may include memory (not illustrated). The processor 460 may compare the temperature detected by the temperature sensor 450 with a predetermined temperature stored in memory (not illustrated). In an example embodiment, the temperature comparison operation 520 may be replaced with an operation in which the processor 460 compares whether a value of difference in temperatures detected by the plurality of temperature sensors 450 is greater than a predetermined magnitude. For example, when the difference in temperatures detected by the plurality of temperature sensors 450 is greater than a predetermined magnitude, the processor 460 may determine that a fire has occurred in at least one of the plurality of battery modules 200 and may generate a signal to stop the circulation pump 420.

The circulation pump driving stop operation 530 may be an operation that stops the operation of the circulation pump 420 when the temperature detected by the temperature sensor 450 is greater than a predetermined temperature. For example, when the temperature detected by the temperature sensor 450 is greater than a predetermined temperature, the processor 460 may determine that a fire has occurred in at least one of the plurality of battery modules 200, and may generate a signal for stopping the circulation pump 420. When the circulation pump 420 is stopped, the temperature of the cooling plate 320 may increase, and a portion of the cooling plate 320 facing the battery module 200 where a fire has occurred may melt. The refrigerant flowing in the cooling plate 320 may be delivered to the battery module 200 where a fire has occurred through a melted portion of the cooling plate 320.

The pressure comparison operation 540 may be an operation in which the processor 460 compares the pressure detected by the pressure sensor 440 with a predetermined pressure. For example, the processor 460 may compare the pressure sensed by the pressure sensor 440 with a predetermined pressure stored in memory (not illustrated). The pressure comparison operation 540 may be performed after or substantially simultaneously with the pressure detection operation of detecting the pressure of the cooling passage 410 using the pressure sensor 440. The pressure comparison operation 540 may be performed after the circulation pump driving stop operation 530.

The circulation pump driving operation 550 may be an operation of operating the circulation pump 420 when the pressure detected by the pressure sensor 440 is less than a predetermined pressure. For example, when the pressure detected by the pressure sensor 440 is less than a predetermined pressure, the processor 460 determines that the refrigerant has leaked through the melted portion of the cooling plate 320, and may generate a signal to operate the circulation pump 420 for circulation of the refrigerant. By operating the circulation pump 420, the refrigerant may be delivered to the battery module 200 where a fire occurred through the melted portion of the cooling plate 320. At least a portion of the compartment (e.g., the compartment 311 in FIG. 4) where the battery module 200 where the ignition occurred is located is filled with refrigerant, and the battery module 200 in which ignition has occurred may be extinguished and/or cooled.

In an example embodiment, the method 500 of controlling a battery system may further include a circulation pump temporary driving operation 560. The circulation pump temporary driving operation 560 may be an operation of temporarily driving the circulation pump 420 after the circulation pump driving stop operation 530. For example, the circulation pump temporary driving operation 560 may be an operation in which the circulation pump 420 operates at least once for a predetermined time interval to flow refrigerant. By allowing the refrigerant to flow for a predetermined time through the circulation pump temporary driving operation 560, misjudgment of pressure drop due to leakage of the refrigerant may be reduced. In an example embodiment, temporary operation of the circulation pump 420 may be an operation in which the circulation pump 420 operates at least once during a predetermined time interval, or may be a state in which less power is used than the power of the circulation pump 420 in the normal operation of the circulation pump 420 (e.g., in the state of the circulation pump driving operation 550 or in the state before the circulation pump driving stop operation 530).

The circulation pump temporary driving operation 560 may be performed based on time, pressure, and/or temperature. In an example embodiment, the processor 460 may generate a signal for temporary operation of the circulation pump 420 for a predetermined time period, after a predetermined time from the circulation pump driving stop operation 530.

In an example embodiment, the processor 460 may generate a signal for temporary operation of the circulation pump 420 based on the temperature detected by the temperature sensor 450 after the circulation pump driving stop operation 530. For example, the processor 460 may generate a signal for temporary operation of the circulation pump 420 when the temperature detected by the temperature sensor 450 is higher than or equal to a predetermined temperature. As another example, the processor 460 may generate a signal for temporary operation of the circulation pump 420 when the temperature difference detected by the plurality of temperature sensors 450 is greater than a predetermined amount.

In an example embodiment, the processor 460 may generate a signal for temporary operation of the circulation pump 420 based on the pressure detected by the pressure sensor 440 after the circulation pump driving stop operation 530. For example, when the pressure of the cooling passage 410 is less than a predetermined value, the processor 460 may generate a signal for temporary operation of the circulation pump 420.

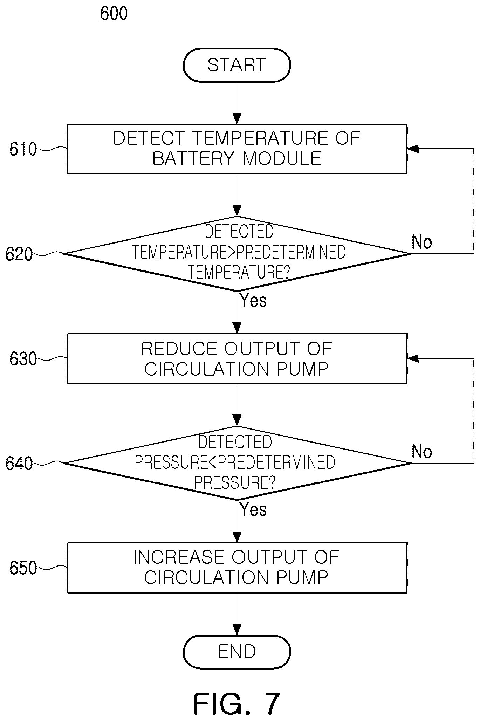

FIG. 7 is a flowchart illustrating a method of controlling a battery system based on an example embodiment.

Referring to FIG. 7 together with FIG. 5, a method 600 of controlling a battery system may include a temperature detection operation 610, a temperature comparison operation 620, a circulation pump output reduction operation 630, a pressure comparison operation 640, and a circulation pump output increase operation 650.

The method 600 of controlling a battery system in FIG. 7 may be a method of controlling the battery system 400 of FIGS. 3 to 5. The temperature detection operation 510, the temperature comparison operation 520, and the pressure comparison operation 540 of FIG. 6 may be applied to the temperature detection operation 610, temperature comparison operation 620, and pressure comparison operation 640 of FIG. 7.

The circulation pump output reduction operation 630 may be an operation that reduces the output of the circulation pump 420 when the temperature detected by the temperature sensor 450 is greater than a predetermined temperature. For example, when the temperature detected by the temperature sensor 450 is greater than a predetermined temperature, the processor 460 may determine that a fire has occurred in at least one of the plurality of battery modules 200, and may generate a signal for reducing the output of the circulation pump 420. As the output of the circulation pump 420 is reduced, the temperature of the cooling plate 320 may increase, and a portion of the cooling plate 320 facing the battery module 200 where a fire has occurred may melt. The refrigerant flowing in the cooling plate 320 may be delivered to the battery module 200 where a fire occurred through the melted portion of the cooling plate 320.

The circulation pump output increase operation 650 may be an operation that increases the output of the circulation pump 420 when the pressure detected by the pressure sensor 440 is less than a predetermined pressure. For example, when the pressure detected by the pressure sensor 440 is less than a predetermined pressure, the processor 460 may determine that the refrigerant has leaked through the melted portion of the cooling plate 320, and may generate a signal to increase the output of the circulation pump 420 for circulation of the refrigerant. By operating the circulation pump 420, the refrigerant may be delivered to the battery module 200 where a fire occurred through the melted portion of the cooling plate 320. At least a portion of the compartment where the battery module 200 where the ignition occurred (e.g., the compartment 311 in FIG. 4) is located is filled with refrigerant, and the battery module 200 in which ignition has occurred may be extinguished and/or cooled.

As set forth above, in an example embodiment, heat propagation between battery modules may be delayed or prevented.

In an example embodiment, refrigerant may flow into a compartment in which a battery module where the fire occurred is located, and the fire in the battery module may be extinguished.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing batterybased energy storage systems (ESSs).

Only a few examples and implementations are described. Other implementations, variations, improvements and enhancements may be made based on what is described and illustrated in this patent document. The invention is defined by the appended claims.

## Claims

1. A battery system (400) comprising:
a battery pack frame (310);
a plurality of battery modules (200) disposed within the battery pack frame (310);
a cooling plate (320) engaged to the battery pack frame (310) and configured to cover the plurality of battery modules (200) and including an accommodation space (321) configured to accommodate a refrigerant for dissipating heat from the plurality of battery modules (200);
a cooling passage (410) connected to the cooling plate (320) to conduct the refrigerant;
a circulation pump (420) connected to the cooling passage (410) and configured to circulate the refrigerant through the cooling passage (410) and the cooling plate (320);
a pressure sensor (440) disposed within the cooling passage (410) and configured to detect a pressure in the cooling passage (410); and
a plurality of temperature sensors (450) disposed on the plurality of battery modules (200) and configured to detect a temperature of the plurality of battery modules (200),
wherein the refrigerant includes at least one of water or insulating coolant,
the battery pack frame (310) includes a compartment (311) configured to accommodate at least one of the plurality of battery modules (200),
at least a portion of the cooling plate (320) is configured to melt upon occurrence of a fire in one or more of the plurality of battery modules (200), and
at least a portion of the refrigerant is configured to flow into a space of the compartment (311) corresponding to the one or more of the plurality of battery modules (200) in which the fire occurred, through a melted portion of the cooling plate (320),
wherein the battery system comprises a processor (460) electrically connected to the plurality of temperature sensors (450) and the pressure sensor (440) to receive information from the temperature sensors (450) and the pressure (440), and
the processor (460) is configured to stop and temporarily drive an output of the circulation pump (420) based on at least one of the temperature detected by one or more of the plurality of temperature sensors (450) and the pressure detected by the pressure sensor (440),
**characterized in that**
the processor (460) is configured to stop an operation of the circulation pump (420) upon a determination that a temperature detected by the plurality of temperature sensors (450) exceeds a predetermined temperature,
or
the processor (460) is configured to stop an operation of the circulation pump (420) upon a determination that a difference between temperature values detected by the plurality of temperature sensors (450) is equal to or greater than a predetermined magnitude.

2. The battery system (400) of claim 1, wherein the processor (460) is configured to reduce the output of the circulation pump (420) upon a determination that the temperature detected by the plurality of temperature sensors (450) exceeds a predetermined temperature, and
the processor (460) is configured to increase the output of the circulation pump (420) upon a determination that the pressure detected by the pressure sensor (440) is less than a predetermined pressure.

3. The battery system (400) of any one of preceding claims, wherein the processor (460) is configured to reduce the output of the circulation pump (420) upon a determination that a difference between temperature values detected by the plurality of temperature sensors (450) is equal to or greater than a predetermined magnitude, and
the processor (460) is configured to increase the output of the circulation pump (420) upon a determination that the pressure detected by the pressure sensor (440) is less than a predetermined pressure.

4. The battery system (400) of any one of preceding claims, further comprising a reserve tank (470) connected to the cooling passage (410) and configured to accommodate at least a portion of the refrigerant.

5. The battery system (400) of claim 4, wherein a volume of the accommodation space (321) of the cooling plate (320), the cooling passage (410), and the reserve tank (470) is greater than or equal to an internal volume of the compartment (311) of the pack frame (310).

6. The battery system (400) of claim 4, further comprising an auxiliary tank (480) connected to the cooling passage (410) and spaced apart from the reserve tank (470).

7. The battery system (400) of any one of preceding claims, further comprising a cooling device (430) connected to the cooling passage (410) and configured to cool the refrigerant.

8. The battery system (400) of any one of preceding claims, wherein the processor (460) is configured to activate the circulation pump (420) upon a determination that the pressure detected by the pressure sensor (440) is less than a predetermined pressure.

9. The battery system (400) of any one of preceding claims, wherein the processor (460) is configured to activate the circulation pump (420) for a predetermined time interval after a predetermined time passes after an operation of the circulation pump (420) is stopped based on a temperature detected by the plurality of temperature sensors (450).

10. The battery system (400) of any one of preceding claims, wherein the processor (460) is configured to activate the circulation pump (420) for a predetermined time interval based on the temperature detected by the temperature sensor (450) after stopping an operation of the circulation pump (420) based on a temperature detected by the plurality of temperature sensors (450).

11. The battery system (400) of any one of preceding claims, wherein the processor (460) is configured to activate the circulation pump (420) for a predetermined time interval based on the pressure detected by the pressure sensor (440) after stopping an operation of the circulation pump (420) based on a temperature detected by the plurality of temperature sensors (450).

## Patentansprüche

1. Batteriesystem (400), aufweisend:
einen Batteriepackrahmen (310);
eine Vielzahl von Batteriemodulen (200), die innerhalb des Batteriepackrahmens (310) angeordnet sind;
eine Kühlplatte (320), die mit dem Batteriepackrahmen (310) in Eingriff ist und dazu konfiguriert ist, die Vielzahl von Batteriemodulen (200) abzudecken, und einen Aufnahmeraum (321) aufweist, der dazu konfiguriert ist, ein Kältemittel zum Ableiten von Wärme von der Vielzahl von Batteriemodulen (200) aufzunehmen;
eine Kühlpassage (410), die mit der Kühlplatte (320) verbunden ist, um das Kältemittel zu leiten;
eine Umwälzpumpe (420), die mit der Kühlpassage (410) verbunden ist und dazu konfiguriert ist, das Kältemittel durch die Kühlpassage (410) und die Kühlplatte (320) zu zirkulieren;
einen Drucksensor (440), der innerhalb der Kühlpassage (410) angeordnet ist und dazu konfiguriert ist, einen Druck in der Kühlpassage (410) zu erfassen; und
eine Vielzahl von Temperatursensoren (450), die an der Vielzahl von Batteriemodulen (200) angeordnet sind und dazu konfiguriert sind, eine Temperatur der Vielzahl von Batteriemodulen (200) zu erfassen,
wobei das Kältemittel mindestens eines von Wasser oder einem isolierendem Kühlmittel aufweist,
der Batteriepackrahmen (310) ein Abteil (311) aufweist, das dazu konfiguriert ist, mindestens eines der Vielzahl von Batteriemodulen (200) aufzunehmen,
mindestens ein Abschnitt der Kühlplatte (320) dazu konfiguriert ist, bei Auftreten eines Feuers in einem oder mehreren von der Vielzahl von Batteriemodulen (200) zu schmelzen, und
mindestens ein Anteil des Kältemittels dazu konfiguriert ist, durch einen geschmolzenen Abschnitt der Kühlplatte (320) in einen Raum des Abteils (311) zu strömen, der mit dem einen oder den mehreren von der Vielzahl von Batteriemodulen (200), in dem das Feuer auftrat, übereinstimmt,
wobei das Batteriesystem einen Prozessor (460) aufweist, der mit der Vielzahl von Temperatursensoren (450) und dem Drucksensor (440) elektrisch verbunden ist, um eine Information von den Temperatursensoren (450) und dem Drucksensor (440) zu empfangen, und
der Prozessor (460) dazu konfiguriert ist, eine Ausgabe der Umwälzpumpe (420) basierend auf mindestens einem von der von einem oder mehreren von der Vielzahl von Temperatursensoren (450) erfassten Temperatur und dem von dem Drucksensor (440) erfassten Druck anzuhalten und vorübergehend anzutreiben,
**dadurch gekennzeichnet, dass**
der Prozessor (460) dazu konfiguriert ist, einen Betrieb der Umwälzpumpe (420) bei einer Bestimmung anzuhalten, dass eine von der Vielzahl von Temperatursensoren (450) erfasste Temperatur eine vorbestimmte Temperatur überschreitet,
oder
der Prozessor (460) dazu konfiguriert ist, einen Betrieb der Umwälzpumpe (420) bei einer Bestimmung anzuhalten, dass eine Differenz zwischen von der Vielzahl von Temperatursensoren (450) erfassten Temperaturwerten gleich oder größer als ein vorbestimmter Betrag ist.

2. Batteriesystem (400) nach Anspruch 1, wobei der Prozessor (460) dazu konfiguriert ist, die Ausgabe der Umwälzpumpe (420) bei einer Bestimmung zu verringern, dass die von der Vielzahl von Temperatursensoren (450) erfasste Temperatur eine vorbestimmte Temperatur überschreitet, und
der Prozessor (460) dazu konfiguriert ist, die Ausgabe der Umwälzpumpe (420) bei einer Bestimmung zu erhöhen, dass der von dem Drucksensor (440) erfasste Druck geringer als ein vorbestimmter Druck ist.

3. Batteriesystem (400) nach einem der vorhergehenden Ansprüche, wobei der Prozessor (460) dazu konfiguriert ist, die Ausgabe der Umwälzpumpe (420) bei einer Bestimmung zu verringern, dass eine Differenz zwischen von der Vielzahl von Temperatursensoren (450) erfassten Temperaturwerten gleich oder größer als ein vorbestimmter Betrag ist, und
der Prozessor (460) dazu konfiguriert ist, die Ausgabe der Umwälzpumpe (420) bei einer Bestimmung zu erhöhen, dass der von dem Drucksensor (440) erfasste Druck geringer als ein vorbestimmter Druck ist.

4. Batteriesystem (400) nach einem der vorhergehenden Ansprüche, ferner einen Reservetank (470) aufweisend, der mit der Kühlpassage (410) verbunden ist und dazu konfiguriert ist, mindestens einen Anteil des Kältemittels aufzunehmen.

5. Batteriesystem (400) nach Anspruch 4, wobei ein Volumen des Aufnahmeraums (321) der Kühlplatte (320), der Kühlpassage (410) und des Reservetanks (470) größer oder gleich einem Innenvolumen des Abteils (311) des Packrahmens (310) ist.

6. Batteriesystem (400) nach Anspruch 4, ferner einen Hilfstank (480) aufweisend, der mit der Kühlpassage (410) verbunden ist und von dem Reservetank (470) beabstandet ist.

7. Batteriesystem (400) nach einem der vorhergehenden Ansprüche, ferner eine Kühlvorrichtung (430) aufweisend, die mit der Kühlpassage (410) verbunden ist und dazu konfiguriert ist, das Kältemittel zu kühlen.

8. Batteriesystem (400) nach einem der vorhergehenden Ansprüche, wobei der Prozessor (460) dazu konfiguriert ist, die Umwälzpumpe (420) bei einer Bestimmung zu aktivieren, dass der von dem Drucksensor (440) erfasste Druck geringer als ein vorbestimmter Druck ist.

9. Batteriesystem (400) nach einem der vorhergehenden Ansprüche, wobei der Prozessor (460) dazu konfiguriert ist, die Umwälzpumpe (420), nachdem eine vorbestimmte Zeit verstrichen ist, für ein vorbestimmtes Zeitintervall zu aktivieren, nachdem ein Betrieb der Umwälzpumpe (420) basierend auf einer von der Vielzahl von Temperatursensoren (450) erfassten Temperatur angehalten wurde.

10. Batteriesystem (400) nach einem der vorhergehenden Ansprüche, wobei der Prozessor (460) dazu konfiguriert ist, die Umwälzpumpe (420) basierend auf der von dem Temperatursensor (450) erfassten Temperatur für ein vorbestimmtes Zeitintervall zu aktivieren, nachdem ein Betrieb der Umwälzpumpe (420) basierend auf einer von der Vielzahl von Temperatursensoren (450) erfassten Temperatur angehalten wurde.

11. Batteriesystem (400) nach einem der vorhergehenden Ansprüche, wobei der Prozessor (460) dazu konfiguriert ist, die Umwälzpumpe (420) basierend auf dem von dem Drucksensor (440) erfassten Druck für ein vorbestimmtes Zeitintervall zu aktivieren, nachdem ein Betrieb der Umwälzpumpe (420) basierend auf einer von der Vielzahl von Temperatursensoren (450) erfassten Temperatur angehalten wurde.

## Revendications

1. Système de batterie (400) comprenant :
un cadre de bloc-batterie (310) ;
une pluralité de modules de batterie (200) disposés à l'intérieur du cadre de bloc-batterie (310) ;
une plaque de refroidissement (320) mise en prise avec le cadre de bloc-batterie (310) et configurée pour recouvrir la pluralité de modules de batterie (200) et comprenant un espace de logement (321) configuré pour loger un réfrigérant pour dissiper la chaleur de la pluralité de modules de batterie (200) ;
un passage de refroidissement (410) relié à la plaque de refroidissement (320) pour conduire le réfrigérant ;
une pompe de circulation (420) reliée au passage de refroidissement (410) et configurée pour faire circuler le réfrigérant à travers le passage de refroidissement (410) et la plaque de refroidissement (320) ;
un capteur de pression (440) disposé à l'intérieur du passage de refroidissement (410) et configuré pour détecter une pression dans le passage de refroidissement (410) ; et
une pluralité de capteurs de température (450) disposés sur la pluralité de modules de batterie (200) et configurés pour détecter une température de la pluralité de modules de batterie (200),
où le réfrigérant comprend au moins l'un parmi l'eau ou un réfrigérant isolant,
où le cadre de bloc-batterie (310) comprend un compartiment (311) configuré pour loger au moins l'un de la pluralité de modules de batterie (200),
où au moins une partie de la plaque de refroidissement (320) est configurée pour fondre lors de la survenue d'un incendie dans un ou plusieurs de la pluralité de modules de batterie (200), et
où au moins une partie du réfrigérant est configurée pour s'écouler dans un espace du compartiment (311) correspondant aux un ou plusieurs de la pluralité de modules de batterie (200) dans lesquels l'incendie s'est produit, à travers une partie fondue de la plaque de refroidissement (320),
où le système de batterie comprend un processeur (460) connecté électriquement à la pluralité de capteurs de température (450) et au capteur de pression (440) pour recevoir des informations des capteurs de température (450) et du capteur de pression (440), et
où le processeur (460) est configuré pour arrêter et entraîner temporairement une sortie de la pompe de circulation (420) sur la base d'au moins l'une parmi la température détectée par un ou plusieurs de la pluralité de capteurs de température (450) et la pression détectée par le capteur de pression (440),
**caractérisé en ce que**
le processeur (460) est configuré pour arrêter un fonctionnement de la pompe de circulation (420) lors d'une détermination qu'une température détectée par la pluralité de capteurs de température (450) dépasse une température prédéterminée,
ou
**en ce que** le processeur (460) est configuré pour arrêter un fonctionnement de la pompe de circulation (420) lors d'une détermination qu'une différence entre des valeurs de température détectées par la pluralité de capteurs de température (450) est égale ou supérieure à une amplitude prédéterminée.

2. Système de batterie (400) selon la revendication 1, où le processeur (460) est configuré pour réduire la sortie de la pompe de circulation (420) lors d'une détermination que la température détectée par la pluralité de capteurs de température (450) dépasse une température prédéterminée, et
où le processeur (460) est configuré pour augmenter la sortie de la pompe de circulation (420) lors d'une détermination que la pression détectée par le capteur de pression (440) est inférieure à une pression prédéterminée.

3. Système de batterie (400) selon l'une quelconque des revendications précédentes, où le processeur (460) est configuré pour réduire la sortie de la pompe de circulation (420) lors d'une détermination qu'une différence entre des valeurs de température détectées par la pluralité de capteurs de température (450) est égale ou supérieure à une amplitude prédéterminée, et
où le processeur (460) est configuré pour augmenter la sortie de la pompe de circulation (420) lors d'une détermination que la pression détectée par le capteur de pression (440) est inférieure à une pression prédéterminée.

4. Système de batterie (400) selon l'une quelconque des revendications précédentes, comprenant en outre un réservoir de réserve (470) relié au passage de refroidissement (410) et configuré pour loger au moins une partie du réfrigérant.

5. Système de batterie (400) selon la revendication 4, où un volume de l'espace de logement (321) de la plaque de refroidissement (320), du passage de refroidissement (410) et du réservoir de réserve (470) est supérieur ou égal à un volume interne du compartiment (311) du cadre de bloc-batterie (310).

6. Système de batterie (400) selon la revendication 4, comprenant en outre un réservoir auxiliaire (480) relié au passage de refroidissement (410) et espacé du réservoir de réserve (470).

7. Système de batterie (400) selon l'une quelconque des revendications précédentes, comprenant en outre un dispositif de refroidissement (430) relié au passage de refroidissement (410) et configuré pour refroidir le réfrigérant.

8. Système de batterie (400) selon l'une quelconque des revendications précédentes, où le processeur (460) est configuré pour activer la pompe de circulation (420) lors d'une détermination que la pression détectée par le capteur de pression (440) est inférieure à une pression prédéterminée.

9. Système de batterie (400) selon l'une quelconque des revendications précédentes, où le processeur (460) est configuré pour activer la pompe de circulation (420) pendant un intervalle de temps prédéterminé après qu'un temps prédéterminé s'est écoulé après qu'un fonctionnement de la pompe de circulation (420) a été arrêté sur la base d'une température détectée par la pluralité de capteurs de température (450).

10. Système de batterie (400) selon l'une quelconque des revendications précédentes, où le processeur (460) est configuré pour activer la pompe de circulation (420) pendant un intervalle de temps prédéterminé sur la base de la température détectée par le capteur de température (450) après l'arrêt d'un fonctionnement de la pompe de circulation (420) sur la base d'une température détectée par la pluralité de capteurs de température (450).

11. Système de batterie (400) selon l'une quelconque des revendications précédentes, où le processeur (460) est configuré pour activer la pompe de circulation (420) pendant un intervalle de temps prédéterminé sur la base de la pression détectée par le capteur de pression (440) après l'arrêt d'un fonctionnement de la pompe de circulation (420) sur la base d'une température détectée par la pluralité de capteurs de température (450).
